# EUROPEAN PATENT APPLICATION

(11) **EP 4 745 935 A2**
(43) Date of publication of application: **20.05.2026**
(21) Application number: 26170064.5
(22) Date of filing: 10.08.2021
(51) Int. Cl.: G08C 17/02

(54) **WIRELESS DEADMAN SWITCH FOR AIRCRAFT FUELING VEHICLE**

(62) Divisional of application: 21953466.6
(71) Applicant: Yano Special Purpose Vehicle Co., Ltd., Fukuoka, 811-0123 (JP)
(72) Inventor: RIKIMARU, Kiyomi, Kasuya-gun, Fukuoka, 811-0123 (JP); MURASE, Takahisa, Kasuya-gun, Fukuoka, 811-0123 (JP); YANO, Natsuko, Kasuya-gun, Fukuoka, 811-0123 (JP)
(74) Representative: Bandpay & Greuter

(57) **Abstract**

The present invention provides a wireless deadman device (1) for operating a refueling device (101) arranged in an aircraft refueling vehicle for supplying aviation fuel to an aircraft (200). The wireless deadman device comprises a transmitter (10) and a receiver (20) configured for wireless communication to operate the refueling device. The transmitter includes a lever handle (15), a mode change button (12) for stepwise adjustment of the refueling amount, an emergency stop button (11), a battery (B), and LEDs for indicating communication status, battery level, and refueling amount. The receiver includes a holder for integrally arranging the transmitter and receiver, a pairing switch, and LEDs (22, 23, 24) for indicating the transmitter battery state, pairing state, and arrangement state. The receiver operates the refueling device to refuel aviation fuel to the aircraft with the refueling amount set by the mode change button while receiving a refueling signal from the transmitter.

## Description

### Technical Field

The present invention relates to a wireless deadman switch for aircraft refueling vehicle, and for more information, the present invention relates to a wireless deadman switch installed on an aircraft refueling vehicle which a workman can operate while controlling a fuel supply amount when aviation fuel is supplied to an aircraft.

### Background Art

Conventionally, it exists, an aircraft refueling vehicle (refueler type) having a fuel tank storing aviation fuel and supplying the aviation fuel to an aircraft. Further, in an airport where the aviation fuel is stored in the fuel tank arranged in underground of the airport, the aviation fuel can be supplied to the aircraft from the fuel tank of underground through a fuel filler arranged above ground. Therefore, in the airport where the aviation fuel is stored in the fuel tank of underground, hoses and pressure equipment to supply aviation fuel to the aircraft are provided and the aircraft refueling vehicle (hydrant type refueling vehicle and called as servicer) is used.

As mentioned in the above, as a remote control device used in the fueling vehicle to supply aviation fuel to the aircraft, it is proposed a refueling vehicle having a wired deadman switch which the worker operates ON/OFF of refueling of the aviation fuel (for example, see Patant Literature 1).

### Citation List

### Patent Literature

Patent Literature 1: Japanese Patent Application laid open No. 2000-318508

### Summary of Invention

### Technical Problem

Conventionally, there are few cases that the aviation fuel is filled up in the fuel tank of the aircraft when the aviation fuel is supplied to the aircraft. Generally, supply amount of the aviation fuel is determined by adding up amount of the aviation fuel necessary to fly to the next destination and amount of the aviation fuel necessary during emergency response, such determined supply amount of the aviation fuel is supplied to the fuel tank of the aircraft. Thus, the worker confirms the supply amount supplied to the aircraft while confirming fuel gauge of the fuel tank. However, since the deadman switch as the remote control device described in the Patent Literature 1 is wired, the worker has to pay attention for handling of wired cables when the worker moves to a position where the fuel gauge arranged near the fuel tank of the aircraft can be made visible.

Further, the deadman switch as the remote control device described in the Patent Literature 1 is to merely operate ON/OFF of refueling and such deadman switch has no function to change flow rate per unit time of the aviation fuel (hereinafter, called as supply amount) refueled to the fuel tank of the aircraft from the aircraft fueling vehicle through the refueling hose.

The present invention is accomplished to solve the above technical problem and has a purpose to provide a wireless deadman switch installed in the aircraft refueling vehicle through which the worker can operate refueling amount when the aviation fuel is refueled to the aircraft.

### Solution to Problem

In order to achieve the above purpose, the present invention is a wireless deadman switch in which a transmitter and a receiver are connected so as to enable wireless communication, to refuel aviation fuel to an aircraft by operating a refueling device arranged in an aircraft refueling vehicle,
wherein the transmitter has a lever handle to transmit a refueling signal to the receiver when a worker grasps with a predetermined pressure, a mode change button capable of changing refueling amount step by step by the worker, an emergency stop button of refueling, a rechargeable battery, various LEDs to display communication state with the receiver, battery level, refueling amount changed by the mode change button,
wherein the receiver has a transmitter charging holder capable of integrally arranging the transmitter and the receiver and charging the battery of the transmitter, a pairing switch to set pairing with the transmitter, various LEDs to display charging state of the battery of the transmitter, pairing state with the transmitter, arranging state of the transmitter, and
wherein the aviation fuel is refueled to the aircraft by operating the refueling device with the refueling amount set by the mode change button while the receiver receives the refueling signal from the transmitter.

Further, the receiver has timer function to monitor a continuous reception time of the refueling signal received from the transmitter,
wherein the timer function sends a warning and notifies the warning to the worker when it is detected that the continuous reception time of the refueling signal received from the transmitter elapses a first predetermined time,
wherein the timer function cancels transmission of the warning when it is detected that the refueling signal received from the transmitter is cancelled for a predetermined time while the warning is notified, and
wherein the timer function stops the operation of the refueling device even if the refueling signal from the transmitter is received when it is not detected that the refueling signal received from the transmitter is cancelled for the predetermined time while the warning is notified and it is detected that the continuous reception time of the refueling signal received from the transmitter elapses a second predetermined time.

Further, a surface of the transmitter charging holder of the receiver is formed in a same shape as a bottom surface of the transmitter and the transmitter can be installed with a standing state on the transmitter charging holder through magnetic force of magnets respectively embedded in the bottom surface of the transmitter and the surface of the transmitter charging holder.

### Advantageous Effects of Invention

According to the present invention, the transmitter has a lever handle to transmit a refueling signal to the receiver when a worker grasps with a predetermined pressure, a mode change button capable of changing refueling amount step by step by the worker, an emergency stop button of refueling, a rechargeable battery, various LEDs to display communication state with the receiver, battery level, refueling amount changed by the mode change button, further the receiver has a transmitter charging holder capable of integrally arranging the transmitter and the receiver and charging the battery of the transmitter, a pairing switch to set pairing with the transmitter, various LEDs to display charging state of the battery of the transmitter, pairing state with the transmitter, arranging state of the transmitter. In the above wireless deadman switch, the aviation fuel is refueled to the aircraft by operating the refueling device with the refueling amount set by the mode change button while the receiver receives the refueling signal from the transmitter.

According to the above wireless deadman switch, different from the conventional wired deadman switch as the remote control device, the worker can freely move without taking care of handling of wires (cables) when the worker moves to a position where the worker can see and confirm the fuel gauge set near the fuel tank of the aircraft, in a case that the worker moves with the transmitter and confirms the refueling amount. Further, based on that the worker grasps the lever handle of the transmitter while confirming the fuel gauge of the fuel tank, the fuel refueling device of the aircraft refueling vehicle is operated and accurate amount of the aviation fuel can be refueled to the aircraft.

Further, the worker can change the refueling amount step by step by operating the mode change button of the transmitter. Therefore, for example, the refueling can be efficiently done by increasing the refueling amount at the start of refueling and during the refueling and the refueling can be done with accurate amount by decreasing the refueling amount at the end of refueling. At that time, the worker can see and confirm the refueling amount changed by the mode change button by a plurality of the LEDs (for example, three LEDs) provided on the transmitter.

Further, the receiver has timer function to monitor a continuous reception time of the refueling signal received from the transmitter and according to the timer function, a warning is sent and notified to the worker when it is detected that the continuous reception time of the refueling signal received from the transmitter elapses a first predetermined time, transmission of the warning is cancelled when it is detected that the refueling signal received from the transmitter is cancelled for a predetermined time while the warning is notified and the operation of the refueling device is stopped even if the refueling signal from the transmitter is received when it is not detected that the refueling signal received from the transmitter is cancelled for the predetermined time while the warning is notified and it is detected that the continuous reception time of the refueling signal received from the transmitter elapses a second predetermined time.

Generally in refueling of the aircraft, continuous time of refueling by the worker is regulated. Thus, the receiver monitors continuous receiving time of the refueling signal transmitted from the transmitter based on grasping of the lever handle by the worker through timer function. Further, the receiver notifies to the worker (warning light or warning buzzer and the like) that the continuous receiving time of the refueling signal received form the receiver exceeds first predetermined time (for example, one minute and thirty seconds) . The worker recognizing the warning stops grasping of the lever handle for a predetermined time (for example, 0. 3 seconds), thereafter grasps again. Thereby, the refueling signal transmitted to the receiver from the transmitter becomes OFF (for example, 0.3 seconds). The receiver detecting this state resets the warning against the worker and refueling work is continued without a break according to receiving of the refueling signal due to grasping of the lever handle of the transmitter by the worker. Further, in a case that it is not detected OFF state of the refueling signal from the transmitter for a predetermined time while the warning is notified to the worker, and the receiver detects that the continuous receiving time of the refueling signal received from the transmitter exceeds a second predetermined time (for example, two minutes), operation of the refueling device is stopped even if the refueling signal from the transmitter is received.

As mentioned in the above, by monitoring the continuous time of the refueling by the worker (continuous grasping time of the lever handle), for example, it can be prevented that the worker absentmindedly continues the refueling work without confirming the fuel gauge or warning. Further, it can be prevented that fuel exceeding the predetermined amount is refueled to the aircraft.

Further, a surface (placement surface corresponding to bottom surface of the transmitter) of the transmitter charging holder of the receiver is formed in a same shape as the bottom shape of the transmitter and due to magnetic force of magnets respectively embedded in the bottom surface of the transmitter and the surface of the transmitter charging holder, the transmitter can be set on the transmitter charging holder in a stand state. As mentioned, by forming the surface of the transmitter charging holder of the receiver and the button surface of the transmitter in the same shape, the direction of the transmitter set on the transmitter charging holder can be limited. Thereby, a connecting terminal to charge the battery provided on the bottom surface of the transmitter can be installed above a connecting terminal for charging formed on the surface of transmitter charging holder.

Further, by respectively embedding the magnet (for example, neodymium magnet) on the bottom surface of the transmitter and the surface of transmitter charging holder, the transmitter formed vertically can be stably placed on the upper surface of the transmitter charging holder, thereby the transmitter can be integrally placed on the upper surface of the receiver.

### Brief Description of Drawings

Fig. 1 is a perspective view indicating exterior of the wireless deadman switch according to the embodiment of the present invention.
Fig. 2 is a perspective view indicating a state that the transmitter and the receiver of the wireless deadman switch of the embodiment according to the present invention are separated.
Fig. 3 is a plan view to explain refueling work by using the wireless deadman switch of the embodiment according to the present invention.
Fig. 4 is a perspective view to explain refueling work by the worker by using the wireless deadman switch of the embodiment according to the present invention.
Fig. 5 is three views to explain composition of the transmitter in the wireless deadman switch of the embodiment according to the present invention.
Fig. 6 is a sectional view to explain inner composition of the transmitter in the wireless deadman switch of the embodiment according to the present invention.
Fig. 7 is a plan view to explain composition of the receiver in the wireless deadmam switch of the embodiment according to the present invention.

### Description of Embodiments

The present invention relates to a wireless deadman switch in which a transmitter and a receiver are connected so as to enable wireless communication, to refuel aviation fuel to an aircraft by operating a refueling device arranged in an aircraft refueling vehicle,
wherein the transmitter has a lever handle to transmit a refueling signal to the receiver when a worker grasps with a predetermined pressure, a mode change button capable of changing refueling amount step by step by the worker, an emergency stop button of refueling, a rechargeable battery, various LEDs to display communication state with the receiver, battery level, refueling amount changed by the mode change button,
wherein the receiver has a transmitter charging holder capable of integrally arranging the transmitter and the receiver and charging the battery of the transmitter, a pairing switch to set pairing with the transmitter, various LEDs to display charging state of the battery of the transmitter, pairing state with the transmitter, arranging state of the transmitter, and
wherein the aviation fuel is refueled to the aircraft by operating the refueling device with the refueling amount set by the mode change button while the receiver receives the refueling signal from the transmitter.

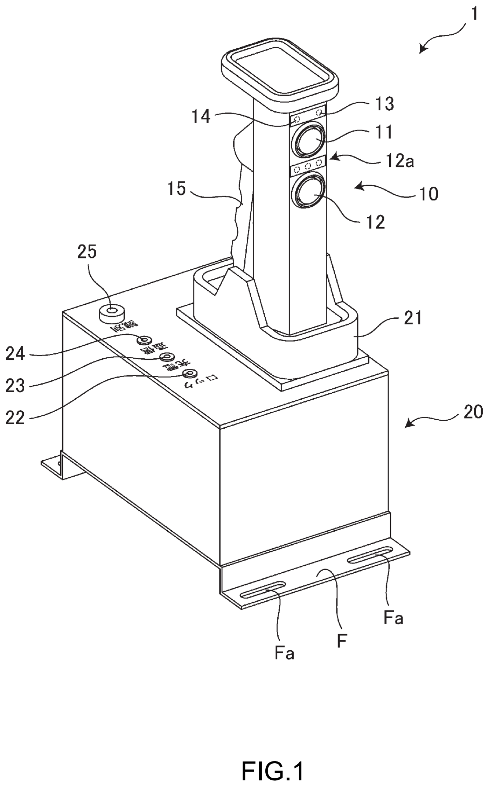

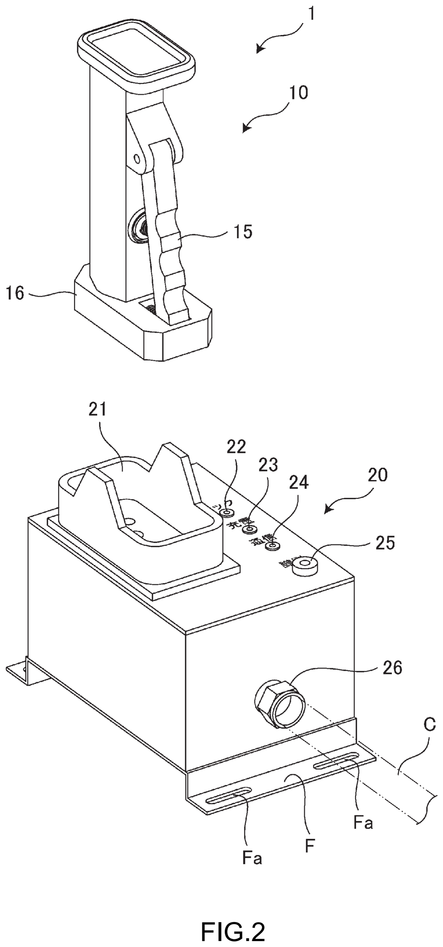

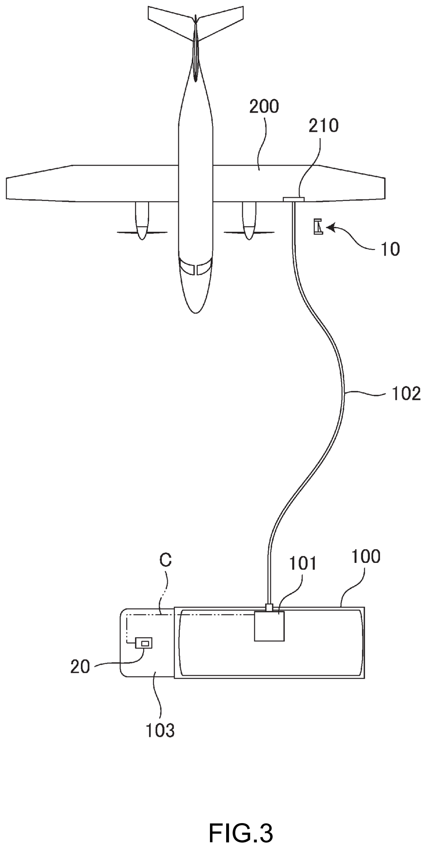

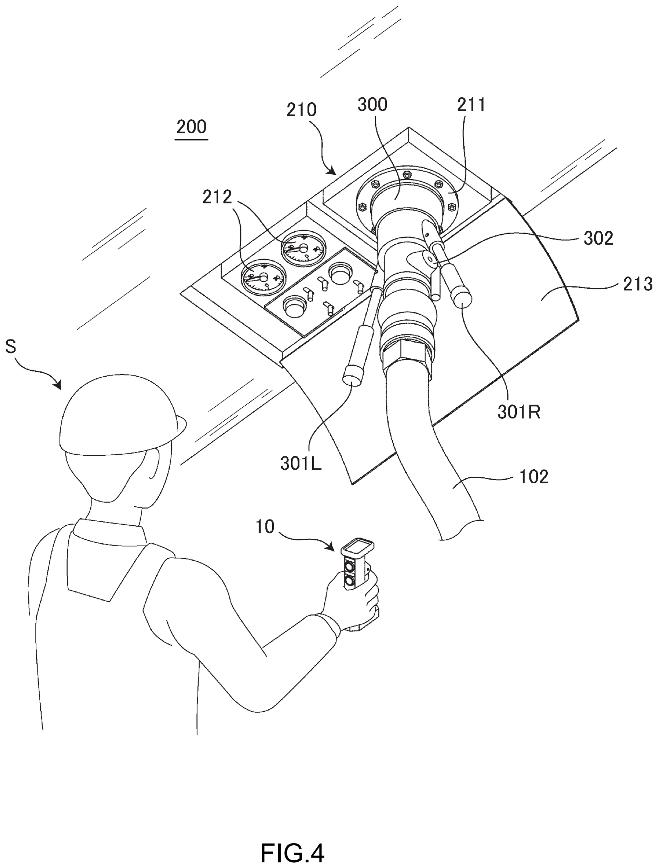

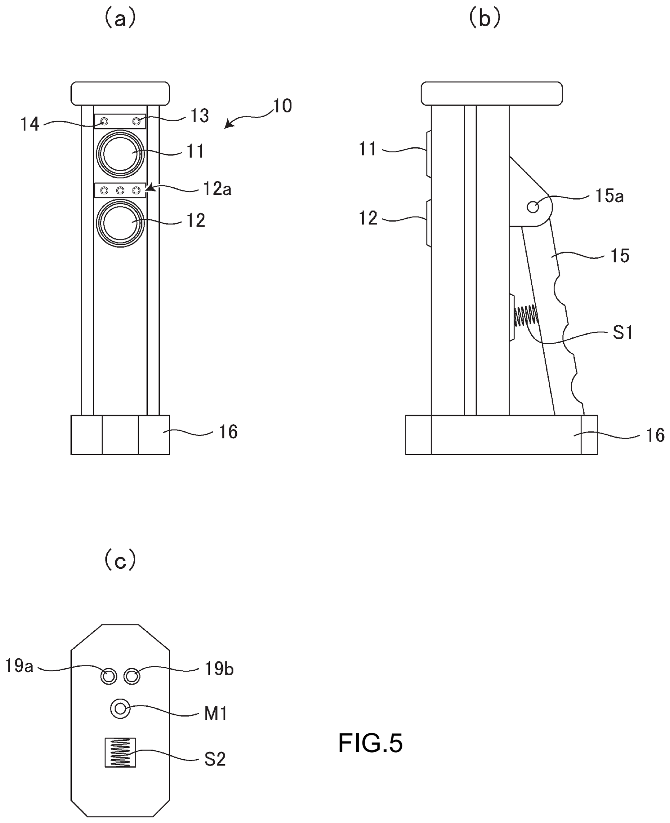

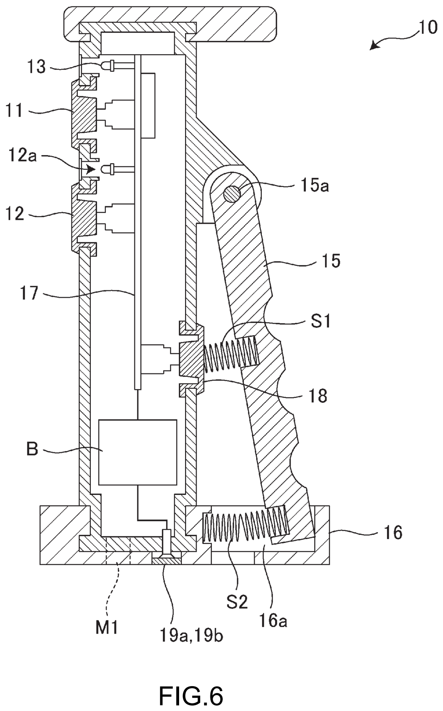

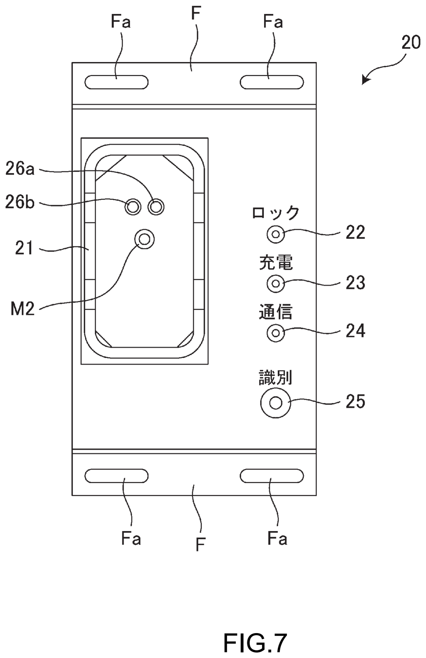

Hereinafter, it will be concretely described referring Figs. 1 ~ 7 composition and function of the wireless deadman switch of the embodiment according to the present invention. Here, Fig. 1 is a perspective view indicating exterior of the wireless deadman switch according to the embodiment of the present invention, Fig. 2 is a perspective view indicating a state that the transmitter and the receiver of the wireless deadman switch of the embodiment according to the present invention are separated, Fig. 3 is a plan view to explain refueling work by using the wireless deadman switch of the embodiment according to the present invention, Fig. 4 is a perspective view to explain refueling work by the worker by using the wireless deadman switch of the embodiment according to the present invention, Fig. 5 is three views to explain composition of the transmitter in the wireless deadman switch of the embodiment according to the present invention, Fig. 6 is a sectional view to explain inner composition of the transmitter in the wireless deadman switch of the embodiment according to the present invention and Fig. 7 is a plan view to explain composition of the receiver in the wireless deadmam switch of the embodiment according to the present invention.

Here, the wireless deadman switch described hereinafter, as shown in Fig. 3, a base end of a refueling hose 102 installed in an aircraft refueling vehicle 100 is connected with a refueling device 101 of the aircraft refueling vehicle and a top refueling nozzle 300 (see Fig. 4) is used by a worker under a state that the top refueling nozzle 300 is connected and fixed to a refueling portion 210 of an aircraft 200. Here, as the aircraft refueling vehicle 100 of the present embodiment, it may be suitable for any of an aircraft refueling vehicle 100 (refueler type) having a fuel tank storing aviation fuel and an aircraft refueling vehicle 100 (hydrant type) capable of refueling aviation fuel to the aircraft from an underground fuel tank

As shown in Figs. 1 and 2, the wireless deadman switch 1 is composed from a transmitter 10 and a receiver 20. When the wireless deadman switch 1 of the embodiment is not used, the transmitter 10 is integrally placed on the upper surface of the receiver 20 and only when the transmitter 10 is used, the transmitter 10 is separated from the upper surface of the receiver 20. Further, the worker operates the transmitter 10 near the refueling portion 210 of the aircraft 200, thereby the refueling device 101 of the aircraft refueling vehicle is operated, as a result, the aviation fuel is refueled to the aircraft 200 with a predetermined refueling amount.

The transmitter 10 is vertically formed in a rod-like (stick-like) shape so that the worker can easily grasp with one hand. As material to form the transmitter, it is suitably used plastic material composed of polycarbonate resin as raw material, the polycarbonate resin being kind of thermoplastic resin excellent in impact resistance and durability. As impact resistance, strength is tolerably satisfied when the transmitter is freely fallen from a distance of 1m from above on a concrete surface. Here, in explanation hereinafter, it will be described for convenience a surface on which various buttons or various LEDs are arranged is called as a front surface and a surface on which the lever handle 15 grasped by the worker is arranged is called as a rear surface.

On an upper portion of the front surface of the transmitter 10, an emergency stop button 11 and a mode change button 12 as operation buttons by the worker are arranged up and down. When the worker presses the emergency stop button 11, refueling by the refueling device 101 of the aircraft refueling vehicle is stopped immediately. When the emergency stop button 11 is pressed, the refueling stop signal is transmitted to the receiver 20 with priority over various buttons and switches provided on the receiver 10.

The mode change button 12 is to change refueling amount (flow amount of aviation fuel per unit time supplied to the fuel tank by the fuel hose) step by step and in the embodiment, every the worker presses the mode change button 12, output of the refueling pump (not shown) installed in the refueling device 101 of the aircraft refueling vehicle 100 can be changed in three stages of low, medium and high. Output of the refueling pump is linked with rotational speed of engine of the aircraft refueling vehicle 100. That is, by changing the rotational speed of the engine to low speed mode, medium speed mode and high speed mode, the output of the refueling pump is changed in three stages of low, medium and high. Corresponding to this, the refueling amount is changed in three stages of small amount, medium amount and large amount. As one example of way to use the mode change button 12, the mode change button 12 is set to high speed mode at start of refueling and during refueling, thereby refueling is efficiently conducted while increasing refueling amount, and the mode change button 12 is operated to medium speed mode or the low speed mode at end of refueling (when refueling amount becomes a predetermined amount), thereby refueling amount is decreased step by step, as a result, aviation fuel can be refueled to the aircraft with exact amount.

On right and left upper portion of the emergency stop button 11, there are arranged a communication LED 13 notifying communication state with the receiver 20 to the worker and a power supply LED 14 notifying charging state of a battery B (see Fig. 6) installed in the transmitter 10 to the worker. At an upper portion of the mode change button 12, there are provided three mode LEDs 12a indicating refueling amount changed by the worker arranged in a row along a parallel direction. These mode LEDs 12a indicate low speed mode, medium speed mode and high speed mode corresponding to rotational speed of the engine of the aircraft refueling vehicle 100. As one example, the worker presses the mode change button 12, rotational speed of the engine of the aircraft refueling vehicle 100 is rotationally changed in three stages of low speed mode →medium speed mode →high speed mode→low speed mode.

On the rear surface of the transmitter 10, a lever handle 15 grasped by the worker is provided a top end of which is rotatably pivoted. Although detail thereof will be described hereinafter, the lever handle 15 is urged by two coil springs S1, S2 (see Fig. 6) at medium portion and lower portion so as to press the lower portion outward (in a direction separating from the rear surface). Further, when the worker grasps the lever handle 15 with a pressure exceeding urging force of two coil springs S1, S2, the deadman switch 18 (see Fig. 6) is pressed. Thereby, refueling signal is transmitted from the transmitter 10 detecting press state of the deadman switch 18 to the receiver 20 and the receiver 20 operates the refueling device 101 of the aircraft refueling vehicle 100, thereby aviation fuel is refueled to the aircraft 200. Therefore, by operating refueling through grasping power against the urging force of the two coil springs S1, S2, it can be prevented misoperation of the lever handle 15 by the worker. Here, as for urging toward outside of the transmitter 10 at the lower portion of the lever handle 15, it is not limited to two coil springs S1, S2. As shown in Fig. 6, other urging members such as leaf spring, torsion spring and the like may be used so long as the lever handle 15 can be urged in a direction separating from the deadman switch 18.

The receiver 20 is, similar to the transmitter 10, formed into a box-like shape from plastic material composed of polycarbonate resin as a raw material, the polycarbonate resin being one kind of thermoplastic resin with excellent impact resistance and durability. Here, the receiver 20 is fixed in a driving seat 103 of the aircraft refueling vehicle 100 and is used, therefore it is not necessary that the receiver 20 is lightweight as the transmitter 10, thus the receiver 20 may be formed into a metallic box-like shape made of aluminum or iron and the like. Here, in description hereinafter, for convenience, it will be described as a front surface of the receiver 20 which is the same direction as the front surface of the transmitter 10 and a rear surface of the receiver 20 which is the same direction as the rear surface of the transmitter 10.

On the upper surface of the receiver 20, it is provided a transmitter charging holder 21 by which the transmitter 10 can be integrally arranged with the receiver 20 and a battery B (see Fig. 6) of the transmitter 10 can be charged. The transmitter charging holder 21 is composed so as to surround and possess an outer circumference of a lower portion 16 of the transmitter 10. Although details thereof will be described hereinafter, the surface of the transmitter charging holder 21 is formed in the same shape as the bottom surface of the lower portion 16 of the transmitter 10. Thereby, when the transmitter 10 is arranged on the transmitter charging holder 21, front/back direction of the transmitter 10 can be limited, therefore the transmitter 10 can be arranged while aligning connection terminals for charging (+terminal and -terminal) of the battery formed on the bottom surface of the transmitter 10 with the upper portion of the connection terminals for charging (+terminal and -terminal) formed on the surface of the transmitter charging holder 21.

Further, magnets (for example, neodymium magnets) are respectively embedded on the bottom surface of the lower portion 16 of the transmitter 10 and on the surface of transmitter charging holder 21. By the magnetic force of these magnets, the bottom surface of the lower portion 16 of the transmitter 10 formed into a vertical rod-like shape can be stably arranged on the upper surface of the transmitter charging holder 21 in a stand state, thus the transmitter 10 can be integrally arranged on the upper surface of the receiver 20, as a result, the transmitter 10 can be compactly arranged within the driving seat 103 of the aircraft aviation fueling vehicle 100. Further, when the transmitter 10 and the receiver 20 are separated, both can be separated with one touch since the transmitter 10 and the receiver 20 are not fixed by screws and the like.

On the surface of the receiver 20, there are provided an interlock LED 22 indicating arrangement sate of the transmitter, a charge LED 23 indicating charging state of the battery B of the transmitter and a communication LED 24 indicating communication state with the transmitter 10. Further, it is provided a pairing switch 25 setting pairing with the transmitter 10. On the front surface of the receiver 20, it is provided an antenna connection portion (not shown) for communicating with the transmitter. On the rear surface of the receiver 20, it is provided a connection portion 26 of cable C, which is composed of a bundle of signal lines to send and receive various signals for controlling the refueling device 101 of the aircraft refueling vehicle 100.

At lower portions of front surface and rear surface of the receiver 20, there are provided frames F to fix the receiver 20 to the driving seat 103 (see Fig. 3) of the aircraft refueling vehicle 100. In each of these frames, it is formed a long hole Fa becoming insertion hole of bolt or screw at two portions. By fastening these long holes Fa with bolt, nut, the receiver 20 can be fixed to the driving seat 103 of the aircraft refueling vehicle 100.

The wireless deadman switch 1 composed according the above, as shown in Figs. 3 and 4, is used by the worker under a state that the base end of the refueling hose 102 installed in the aircraft refueling vehicle 100 is connected with the refueling device 101 of the aircraft refueling vehicle 100 and the top refueling nozzle 300 (see Fig. 4) connected and fixed to the refueling portion 210 of the aircraft 200. Concretely, the worker S carries separated transmitter 10 of the wireless deadman switch 1 to a position where the refueling portion 210 of the aircraft 200 can be seen and recognized and operates it, thereby refueling work is conducted. Here, the refueling device 101 according to the embodiment has a reel (not shown) to conduct taking-up/unrolling of the refueling hose 102 for refueling aviation fuel to the aircraft 200, a refueling pump (not shown) and additionally a control device of control valves for controlling ON/OFF of the refueling and change of refueling amount. Thus, it may be conceivable that there is provided on the transmitter 10 a button to operate the rotational direction of the reel (taking-up direction/unrolling direction) to conduct taking-up rotation/unrolling rotation. The worker S operates the above button, thereby rotation of the reel can be controlled by wireless.

As shown in Fig. 4, the refueling potion 210 is provided on a wing of the aircraft 200 or lower portion of body and refueling nozzle 300 of the top of the refueling hose 102 is connected with a fuel filler 211 under a state that a refueling portion cover 213 is opened. In order to connect the refueling nozzle 300 to the fuel filler 211 with a lock state, the worker S holds a right and left handles 301R, 301L with both hands, both handles 103R, 301L being provided so as to expand from the top of the refueling nozzle 300 to the rear and rotates the refueling nozzle 300 by a predetermined angle (about 90 degrees) around the axis under a state that the top of the refueling nozzle 300 is engaged with the fuel filler 211. Thereby, the refueling nozzle 300 is connected with the fuel filler 211 with a lock state. Further, on the side surface of the refueling nozzle 300, a nozzle open/close lever 302 is attached. After the refueling nozzle 300 connected with the fuel filler 211 with a lock state, the worker S operates to rotate the nozzle open/close lever 302 to a predetermined position. Thereby, a shutoff valve arranged in the top of the refueling nozzle 300 is opened, as a result, the top of the refueling nozzle 300 and the fuel filler 211 are connected and communicated. In this state, aviation fuel can be refueled to the fuel tank. Under a state that the top of the refueling nozzle 300 and the fuel filler 211 are connected and communicated, rotation around axis of the refueling nozzle 300 is limited by the shutoff valve opening the top of the refueling nozzle 300. That is, under a state that the top of the refueling nozzle 300 and the fuel filler 211 are connected and communicated, the refueling nozzle 300 cannot be removed from the fuel filler 211. Thereby, it can be prevented an accident that aviation fuel leaks from the refueling nozzle 300 provided on the top of the refueling hose 102. Further, in a case that the worker S conducts opposite operation against the nozzle open/close lever 302 and right and left handles 301R, 301L, the refueling nozzle 300 can be separated from the fuel filler 211. In this state, the worker S grasps the lever handle 15 arranged on the rear surface of the transmitter 10 by fingers (excluding thumb). While the worker S grasps the lever handle 15 with a predetermined pressure, the deadman switch 18 (see Fig. 6) is pressed, therefore the refueling signal is sent to the receiver 20 from the transmitter 10.

The receiver 20 receiving the refueling signal sends actuation signal of the refueling pump to the refueling device 101 through the cable C connected with the refueling device 101 of the aircraft refueling vehicle 100. At that time, the worker S refuels aviation fuel with a predetermined amount while visually confirming the fuel gauge 212 arranged in the refueling portion 210. That is, in the present embodiment, the worker S grasps the lever handle 15 on the rear surface of the transmitter 10 with a predetermined pressure while visually confirming the fuel gauge 212 provided on the refueling portion 210, thereby aviation fuel with a predetermined amount can be refueled to the aircraft 200.

The receiver 20 has timer function to monitor the continuous receiving time of the refueling signal received from the transmitter 10 based on the worker S grasps the lever handle 15. The timer function monitors the continuous grasping time of the lever handle 15 by the worker S. Concretely, when the receiver 20 detects that the continuous receiving time of the refueling signal received from the transmitter 10 exceeds the first predetermined time (for example one minute and thirty seconds), the receiver 20 sends an alarm and notifies the worker S. The alarm is notified by warning light or warning buzzer (not shown) arranged at a position where the worker S can visually recognize and hear. Further, after recognizing the warning the worker S stops grasp of the lever handle 15 for a predetermined time (for example, within 0.3 seconds), thereafter grasps the lever handle 15 again. Thereby, the refueling signal sent to the receiver 20 from the transmitter 10 becomes OFF for a predetermined time (for example, within 0.3 seconds). The receiver 20 detecting this state resets the warning against the worker S and continuously corresponding to receiving of the refueling signal due to grasp of the lever handle 15 of the transmitter 10 by the worker S, refueling work is continued. At that time, as the refueling amount of aviation fuel refueled to the aircraft 200, the state changed through the mode change button 12 of the transmitter 10 by the worker S is continued.

In a case that the receiver 20 does not detect OFF state of the refueling signal for a predetermined time (for example, within 0.3 seconds) from the transmitter 10 during the warning is notified to the worker S, the receiver 20 detects whether or not the continuous receiving time of the refueling signal received from the transmitter 10 exceeds a second predetermined time (for example, 2 minutes). When the receiver 20 detects that the continuous receiving time exceeds the second predetermined time, operation of the refueling device is stopped even if the refueling signal from the transmitter 10 is received. Thereby, the refueling work corresponding to grasp of the lever handle 15 of the transmitter 10 is stopped. At that time, as for the refueling amount of aviation fuel refueled to the aircraft 200 the state changed by the mode change button 12 of the transmitter by the worker S is reset. For example, such state is reset to the initial low speed mode.

As mentioned in the above, the continuous time of the refueling by the worker S (continuous grasp time of the lever handle 15) is monitored, thereby it can be called attention against the worker S that the refueling work is conducted. For example, it can be prevented that the worker S absentmindedly continues the refueling work without confirming the fuel gauge or warning. Thereby, it can be prevented that aviation fuel exceeding the predetermined amount is refueled to the fuel tank of the aircraft 200.

Hereinafter, with reference to Figs. 5 to 7, it will be described in detail function of various buttons and LEDs arranged in the wireless deadman switch 1 of the transmitter 10 and the receiver 20 according to the present embodiment. As shown in Fig. 5(a), on the front upper portion of the transmitter 10, there are provided the emergency stop button 11 and the mode change button 12 up and down, as the operational buttons by the worker. As shown in Fig. 4, the worker S grasps the lever handle 15 provided on the rear surface of the transmitter 10 by finger side of one hand (excluding thumb) and the emergency stop button 11 and the mode change button 12 arranged on the front upper portion of the transmitter 10 are operated by the thumb of one hand, thereby press of the emergency stop button 11 is sent with top priority to the receiver 20 from the transmitter 10 and the receiver 20 immediately stops refueling through the refueling device 101.

The mode change button 12 is operated by the thumb of the worker S and as described in the above, output of the refueling pump (not shown) in the refueling device 101 interlocking with rotational number of the engine of the aircraft refueling vehicle 100 is changed in three stages of low speed mode, medium mode and high speed mode, thereby refueling amount is changed.

The communication LED 13 notifying the worker the communication state with the receiver 20 arranged on the right upper portion of the emergency stop button 11 is alternately lightened between yellow and blue, thereby it is indicated that connection with the receiver 20 is good. When only yellow is lightened, it is notified to the worker S that communication with the receiver 20 is not done. As mentioned, by notifying the communication state with the receiver 20 to the worker, the worker can rapidly grasp abnormality and the like of the communication state between the transmitter 10 and the receiver 20, thus it can be prevented that the refueling work is conducted under a state that communication remains poor.

The power source LED 14 is provided on the left upper portion of the emergency stop 11 and notifies the charging state of the battery B installed in the transmitter 10. When it is detected that the charging amount of the battery B is decreased, the power source LED 14 notifies the worker S by flashing red. When the transmitter 10 is set on the transmitter charging holder 21 of the receiver 20 and the battery B is charged, the power source LED 14 notifies the worker S by red light on. Further, when charging of the battery B installed in the transmitter 10 is completed, the power source LED 14 notifies the worker S by yellow green light on. As mentioned, charging state of the battery B installed in the transmitter 10 is notified the worker S, thereby it can be prevented work interruption due to out of battery of the battery B and the like.

Three mode LEDs 12a are provided in a horizontal line on lower portion of the emergency stop button 11 and the upper portion of the mode change button 12. Any one of three LEDs 12a respectively corresponding to low speed mode, medium speed mode and high speed mode, each mode being changed corresponding to operation of the mode change button 12 (that is, press) and having different refueling amount, is lightened. Thereby, it is notified the worker S that the mode is changed to any of low speed mode, medium speed mode and high speed mode.

As shown in Fig. 5(b), on the rear surface of the transmitter 10, the lever handle 15 grasped fingers (excluding thumb) of one hand of the worker S is provided so that the top 15a is pivoted so as to freely rotate. As shown in Fig. 6, the lever handle 15 is urged by the two coil springs S1, S2 at middle portion and lower portion so as to press the lower end of the transmitter 10 outward. When the worker S grasps the lever handle 15 with pressure exceeding urging power of two coil springs S1, S2, the lower end of the lever handle 15 is rotated toward the front surface side within the space 16a in the lower portion 16 of the transmitter 10. Thereby the deadman switch 18 is pressed by the middle portion of the lever handle 15. Thus, press of the deadman switch 18 is detected by a control board 17 installed in the transmitter 10 and the refueling signal is transmitted to the receiver 20 by short range wireless device (not shown) implemented on the control board 17 of the transmitter 10. Here, as urging the lower portion of the lever handle 15 toward outside of the transmitter 10, it is not limited to two coil springs S1, S2. It may be used leaf spring or torsion spring and the like so long as the lever handle 15 can be urged in a direction separating from the deadman switch 18.

Further, when operations of the worker S (that is, press) against the emergency stop button 11 and the mode change button 12 are detected, the control board 17 installed within the transmitter 10 sends a predetermined signal (for example, refueling signal) to the receiver 20 through short range wireless implemented in the control board 17 of the transmitter 10. Further, the control board 17 controls colors indicating various LEDs, lighting and blinking. Further, electricity is supplied to the control board 17 from the battery B installed in the transmitter 10 and control portion (not shown) implemented therein is operated, thereby the control board 17 controls short range wireless device implemented in the control board 17, detection of various buttons (that is, press), lighting color, lights off and blinking of various LEDs.

Here, as short range wireless of the present embodiment, IEEE 802.15.4 which is international standards is suitably used. This international standards are standards formulated by IEEE (I triple E) headquartered in the Unite States, therefore products based on standards are supplied from plural venders without depending on unique standard of one company, thus stability can be secured. Further, in a case that ISM band with 2.4 GHz band is used, such ISM band can be used in the world in addition to Japan.

As shown in Fig. 5(c), on the bottom surface of the lower portion 16 in the transmitter 10, a connection terminal 19a (+ terminal) and a connection terminal 19b (- terminal) to charge the battery B are provided. Further, a magnet M1 (for example, neodymium magnet) is provided.

As shown in Fig. 7, on the upper surface of housing of the receiver 20 formed in a box-like shape, it is provided the transmitter charging holder 21 through which the lower portion 16 of the transmitter 10 can be set integrally with the receiver 20 . The transmitter charging holder 21 holds the lower portion 16 of the transmitter 10 so as to surround outer circumference thereof. The surface of the transmitter charging holder 21 is formed in the same shape as the bottom surface of the lower portion 16 of the receiver 20. Further, the bottom surface of the lower portion 16 of the transmitter 10 is formed in different shape in both the front surface side and the rear surface side. Thereby, when the transmitter 10 is set on the transmitter charging holder 21, direction of the transmitter 10 in front and rear direction can be limited.

On the surface within the transmitter charging holder 21, connection terminals for charging 26a (+ terminal), 26b (- terminal) are provided. Further, the connection terminals for charging battery 19a (+ terminal), 19b (- terminal) provided on the bottom surface of the transmitter 10 are respectively connected with the terminals for charging 26a (+ terminal) , 26b (- terminal) provided on the surface of the transmitter charging holder 21, thereby the battery B installed in the transmitter 10 is charged.

Further, on the central portion of the surface of the transmitter charging holder 21, a magnet M2 ( for example, neodymium magnet) is arranged. This magnet M2 and the magnet M1 arranged on the bottom surface of the lower portion 16 of the transmitter 10 are arranged so that the polarity is different, thereby based on magnetic force of the magnet M1 and magnet M2, the transmitter 10 formed in vertical rod-shape (stick shape) can be integrally stood on the upper surface of the transmitter charging holder 21. Further, when the transmitter 10 and the receiver 20 are separated, both can be separated with one touch by only lifting the transmitter 10 from the upper portion of the receiver 20 against the magnetic force since the transmitter 10 and the receiver 20 are not fixed by screws and the like.

On the surface of the receiver 20, the interlock LED 22 indicating installation state of the transmitter 10, the charge LED 23 indicating charging state of the battery B of the transmitter 10 and the communication LED 24 indicating communication state with the transmitter 10. Further, it is provided the pairing switch 25 for setting pairing with the transmitter 10.

The interlock LED 22 lights up blue under a state that the transmitter 10 is not set on the receiver 20. This interlock LED 22 has function as safety device. Concretely, for example, the worker releases the handbrake or changes running gear from parking or neutral under a state that the transmitter 10 is not set (put) on the receiver 20 (state that the interlock LED 22 light up blue), the aircraft refueling vehicle 100 becomes a state that the engine is stopped. That is, under a state that the transmitter 10 is not set on the receiver 20, the aircraft refueling vehicle 100 cannot be moved.

The charge LED 23 indicates the charging state of the battery B of the transmitter 10, and lights up red during charging, lights up yellow green after completion of charging. The communication LED 24 indicates communication state with the transmitter 10 flashes yellow during wireless transmitting from the receiver 20 to the transmitter 10. Further, the communication LED 24 notifies the pairing result with the transmitter 10 described later to the worker S by flashing yellow.

The pairing switch 25 is a switch to confirm and set the pairing between the transmitter 10 and the receiver 20. The wireless deadman switch 1 of the present embodiment is composed so that only a pair of the transmitter 10 and the receiver 20 can conduct wireless communication, thereby wireless interference or misoperation can be prevented. Thus, when the worker S presses the pairing switch 25 of the receiver 20 while conducting a predetermined operation in the transmitter 10, paring between the transmitter and the receiver through wireless communication and such result is notified the worker S by the communication LED 24 (for example, flashing yellow three times in a case that pairing is OK). Further, in a case that any of the transmitter 10 and the receiver 20 is broken down and exchange is necessary, pairing with the broken transmitter 10 (or the receiver 20) is initialized and confirmation of pairing with the transmitter 10 (or receiver 20) is newly conducted and the same predetermined operations are conducted. Thereby, pairing of the transmitter 10 and the receiver 20 is set.

As mentioned in the above, according to the wireless deadman switch 1 of the present invention, different from the wired deadman switch as the conventional remote control device, in order to confirm the refueling amount, when the worker S having the transmitter 10 moves to a position where the fuel gauge arranged near the fuel tank of the aircraft 200 can be visually recognized, the worker S can freely move without worrying handling of wires (cables). Further, the worker S grasps the lever handle 15 of the transmitter while confirming the fuel gauge 212 of the fuel tank, thereby aviation fuel with a predetermined amount can be refueled to the aircraft 200 by activating the refueling device 101 of the aircraft refueling vehicle 100.

Further, the worker S changes refueling amount (flow amount per unit time of aviation fuel refueled to the fuel tank). For example, the refueling can be efficiently done by increasing the refueling amount at the start of refueling and during the refueling and the refueling can be done with accurate amount by decreasing the refueling amount at the end of refueling. At that time, the worker can see and confirm the refueling amount changed by the mode change button through a plurality of the LEDs (for example, three LEDs) provided on the transmitter.

Further, the receiver 20 has timer function which monitors continuous receiving time of the refueling signal transmitted from the transmitter 10 based on grasping of the lever handle 15 by the worker S. Further, the receiver 20 notifies the worker S by sending the alarm (warning light or warning buzzer and the like not shown) that the continuous receiving time of the refueling signal received from the receiver 20 exceeds first predetermined time (for example, one minute and thirty seconds). The worker S recognizing the warning stops grasping of the lever handle 15 for a predetermined time (for example, within 0.3 seconds), thereafter grasps again. Thereby, the refueling signal transmitted to the receiver 20 from the transmitter 10 becomes OFF (for example, within 0.3 seconds. The receiver 20 detecting this state resets the warning against the worker S and refueling work is continued without a break according to receiving of the refueling signal due to grasping of the lever handle 15 of the transmitter 10 by the worker S. On the other hand, in a case that it is not detected OFF state of the refueling signal from the transmitter 10 for a predetermined time (for example, within 0.3 seconds) while the warning is notified the worker S, and the receiver 20 detects that the continuous receiving time of the refueling signal received from the transmitter 10 exceeds a second predetermined time (for example, two minutes), operation of the refueling device is stopped even if the refueling signal from the transmitter 10 is received.

Although the embodiment according to the present invention is described in the above, concrete composition of the present invention is not limited to the above embodiment and even if design changes are conducted within the scope of the gist of the present invention, such concept is included in the present invention.

### Reference of Signs List

- 1: wireless deadman switch
- 10: transmitter
- 11: emergency stop button
- 12: mode change button
- 15: lever handle
- 17: control board
- 18: deadman switch
- 20: receiver
- 21: transmitter charging holder
- 25: pairing switch
- 100: aircraft refueling vehicle
- 200: aircraft

## Claims

1. A wireless deadman device (1) for operating a refueling device(101) arranged in an aircraft refueling vehicle for refueling aviation fuel to an aircraft(200), the wireless deadman device comprising
a transmitter (10) and a receiver (20) which are connected to each other so as to enable wireless communication, to operate the refueling device (101),
the transmitter comprising:
a lever handle (15) to transmit a refueling signal to the receiver (20) when a worker grasps with a predetermined pressure;
a mode change button (12) capable of changing refueling amount step by step by the worker;
an emergency stop button (11) of refueling;
a battery (B); and
various LEDs to display communication state with the receiver, battery level, refueling amount changed by the mode change button;
the receiver comprising:
a transmitter holder capable of integrally arranging the transmitter and the receiver ;
a pairing switch to set pairing with the transmitter; and
various LEDs (22, 23, 24) to display a state of the battery of the transmitter, pairing state with the transmitter, arranging state of the transmitter;
wherein the receiver is configured to operate the refueling device so that the aviation fuel is refueled to the aircraft with the refueling amount set by the mode change button while the receiver receives the refueling signal from the transmitter.

2. The wireless deadman device according to claim 1,
wherein the receiver has timer function to monitor a continuous reception time of the refueling signal received from the transmitter,
wherein the timer function sends a warning and notifies the warning to the worker when it is detected that the continuous reception time of the refueling signal received from the transmitter elapses a first predetermined time,
wherein the timer function cancels transmission of the warning when it is detected that the refueling signal received from the transmitter is cancelled for a predetermined time while the warning is notified, and
wherein the timer function stops the operation of the refueling device even if the refueling signal from the transmitter is received when it is not detected that the refueling signal received from the transmitter is cancelled for the predetermined time while the warning is notified and it is detected that the continuous reception time of the refueling signal received from the transmitter elapses a second predetermined time.

3. The wireless deadman device according to claim 1 or claim 2,
wherein a surface of the transmitter holder of the receiver is formed in a same shape as a bottom shape of the transmitter, and
wherein the transmitter can be set on the transmitter holder in a stand state due to magnetic force of magnets respectively embedded in the bottom surface of the transmitter and the surface of the transmitter holder.
